Europäisches Patentamt

European Patent Office

Office européen des brevets

(19)

(11) Veröffentlichungsnummer: **0 131 675**
**B1**

(12) # EUROPÄISCHE PATENTSCHRIFT

(45) Veröffentlichungstag der Patentschrift:
**10.06.87**

(21) Anmeldenummer: **84100654.7**

(22) Anmeldetag: **23.01.84**

(51) Int. Cl.⁴: **F 16 K  11/22**

---

(54) **Mischarmatur mit zwei Zapfstellen für Sanitärinstallationen.**

---

(30) Priorität: **09.06.83  CH 3177/83**

(43) Veröffentlichungstag der Anmeldung:
**23.01.85 Patentblatt 85/4**

(45) Bekanntmachung des Hinweises auf die Patenterteilung:
**10.06.87 Patentblatt 87/24**

(84) Benannte Vertragsstaaten:
**DE FR GB IT**

(56) Entgegenhaltungen:
**DE-A-2 349 772**
**DE-A-2 912 007**
**DE-A-3 013 651**
**DE-U-8 017 962**

(73) Patentinhaber: **KWC AG, CH- 5726 Unterkulm (CH)**

(72) Erfinder: **Gloor, Roland, Hexacker 377, CH- 5726 Unterkulm (CH)**

(74) Vertreter: **Willi, Anton, J., Alsenmattstrasse 2, CH- 8800 Thalwil (CH)**

EP 0 131 675 B1

## Beschreibung

Gegenstand der Erfindung ist eine Mischarmatur mit zwei Zapfstellen für Sanitärinstallationen, deren Gehäuse mit einem Warmwasser- und einem Kaltwasseranschluss versehen ist, welche Anschlüsse in zwei getrennte Gehäusedurchlässe für den Warmwasser- und den Kaltwasserzufluss münden, wobei jeder dieser Durchlässe einerseits über je einen ersten Kanal mit einer der ersten Zapfstelle vorgeordneten Ausgabevorrichtung und anderseits über je einen zweiten Kanal mit einer der zweiten Zapfstelle vorgeordneten Zweigriff-Mischbatterie verbunden ist, wobei die beiden zweiten Kanäle über je ein Ventil der Zweigriff-Mischbatterie mit einem zentral am Gehäusemittelteil vorgesehenen Mischkammerstutzen verbunden sind, dessen Auslass die zweite, z.B. als Wannenfüll-Mundstück ausgebildete Zapfstelle bildet.

Eine solche als Einloch-Spültischbatterie ausgebildete Armatur ist beispielsweise aus der DE-A-3 013 651 bekannt; die erstgenannte Zapfstelle dient dort der Speisung einer Wasch- und/oder Geschirrspülmaschine wahlweise mit Warm- oder mit Kaltwasser. Die dieser Zapfstelle vorgeordnete Ausgabevorrichtung besitzt eine drehbare Einloch-Steuerscheibe und ist als Badearmatur, bei welcher die eine Zapfstelle als Wanneneinlauf und die andere Zapfstelle als Brausenanschluss dient ungeeignet da einerseits ihre relativ engen Kanäle sich nicht zur Ausgabe der für einen Wanneneinlauf geforderten grossen Wassermenge eignen und anderseits keine der Zapfstellen nur Warm- oder nur Kaltwasser liefern soll. Es ist z. B. durch das DE-U-8 017 962 auch schon eine Badearmatur vorgeschlagen worden die ein L-förmiges Gehäuse mit zwei an den freien Enden der beiden ungleich langen Schenkel vorgesehenen Zapfstellen besitzt. Jeder der beiden Zapfstellen ist eine mit einer drehbaren Zweilochscheibe versehene Mischvorrichtung zugeordnet. Da die beiden Wasseranschlüsse an den Enden des längeren Gehäuseschenkels vorgesehen sind müssen innerhalb dieses Schenkels die beiden Wasserströme im Gegenstrom längs einer gemeinsamen Trennwand geführt werden. Das warme Wasser wird dabei vom einen Ende des längeren Gehäuseschenkels her durch ein von Kaltwasser umspültes Rohr zur Mischvorrichtung am andern freien Ende dieses Schenkels geführt, was zu einem unerwunschten Abkühlen des Warmwassers bzw. Erwärmen des Kaltwassers führt.

Andere bekannte Armaturen dieser Art besitzen eine den beiden Zapfstellen gemeinsam zugeordnete Umstellvorrichtung, mit welcher der jeweils eingestellte Kalt-, Warm- oder Mischwasserstrom wahlweise der einen oder der andern, nicht aber gleichzeitig beiden Zapfstellen zugeleitet werden kann. Als Mischvorrichtung sind bei solchen Armaturen verschiedene Ausführungen üblich, je nach den an Bedienungskomfort bzw. Einstellgenauigkeit gestellten Anforderungen; wo es sich zur Hauptsache darum handelt, relativ grosse Wassermengen abzugeben, eignen sich besonders die sogenannten Zweigriffbatterien, die für den Kalt- und den Warmwasserzulauf je ein eigenes separat bedienbares Ventil aufweisen. Wird jedoch grösserer Bedienungskomfort und genauere Temperatureinstellung einer möglichst grossen Wasserausgabemenge vorgezogen, werden mechanische oder thermostatische Mischer vorgezogen.

Es hat sich nun gezeigt, dass, insbesondere in Bade-, Dusch- und Kücheninstallationen, an die beiden Zapfstellen der Armatur oft völlig unterschiedliche Anforderungen bezüglich Ausgabemenge und Temperaturregelung gestellt werden, die mit ein- und derselben Mischvorrichtung nicht beide optimal erfüllt werden können. Sollen bei einer solchen Armatur die beiden Zapfstellen normalerweise mit einer unterschiedlichen, aber stets etwa gleichbleibenden Wassertemperatur benützt werden, so muss jeweils vor jeder Umstellung die gewünschte Temperatur neu eingestellt werden.

Die vorliegende Erfindung bezweckt nun eine Mischarmatur mit zwei Zapfstellen zu schaffen, bei welcher die genannten Nachteile vermieden sind, d.h. die es gestattet, die zulaufenden Kalt- und Warmwasserströme völlig unabhängig voneinander beliebig gemischt oder ungemischt an der einen oder der anderen oder gleichzeitig an beiden Zapfstellen auszugeben, wobei an der einen Zapfstelle relativ grosse Wassermengen abgegeben werden sollen.

Zu diesem Zweck ist die erfindungsgemässe Mischarmatur dadurch gekennzeichnet, dass die beiden Durchlässe in den an entsprechenden Wasserleitungen anschliessbaren Schenkeln eines C-förmigen Armaturengehäuses gebildete Kammern sind, wobei die genannten ersten Kanäle zu der im Mittelteil des Gehäuses angeordneten als mechanischer oder thermostatischer Mischer ausgeführten Ausgabevorrichtung führen, dessen Mischkammer über einen zentralen Auslaßstutzen mit der ersten z.B. durch eine Brause gebildeten Zapfstelle verbunden ist.

Jeder der beiden Zapfstellen ist somit eine eigene, von der andern völlig unabhängig einstellbare, aus den gleichen beiden Gehäusekammern gespeiste Mischvorrichtung zugeordnet. Beide Zapfstellen lassen sich sowohl nacheinander als auch gleichzeitig miteinander und zwar mit beliebig und unabhängig voneinander eingestellter Wassertemperatur benützen. Der einzelnen Zapfstelle ist dabei jene Mischvorrichtung zugeordnet, die für die an diese Zapfstelle gestellte Anforderung optimal ist, da der einen, z.B. der Speisung einer Brause oder dergl. dienenden, Zapfstelle ein bekanntlich relativ genau einstellbarer mechanischer oder thermostatischer Einhebel-Mischer zugeordnet ist, während der andern, z.B. der Füllung einer Badewanne oder eines andern, grösseren Behälters dienenden Zapfstelle eine, bekanntlich für zeitlich relativ grosse Ausgabemengen besonders geeignete mit zwei getrennt bedienbaren Durchlassventilen versehene Zweigriff-Mischbatterie zugeordnet ist.

Die Erfindung ist im folgenden anhand der Zeichnung beispielsweise erläutert. In der Zeichnung zeigt:

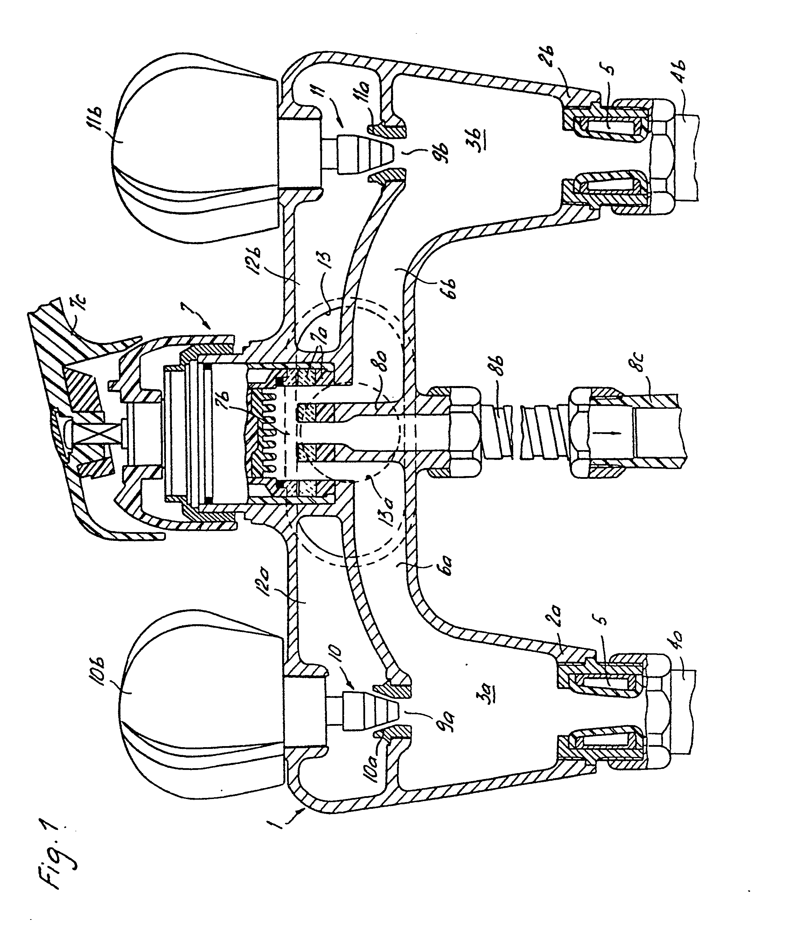

Fig. 1 im Horizontalschnitt eine Zweiloch-Mischarmatur für Badewanne und Brause, und

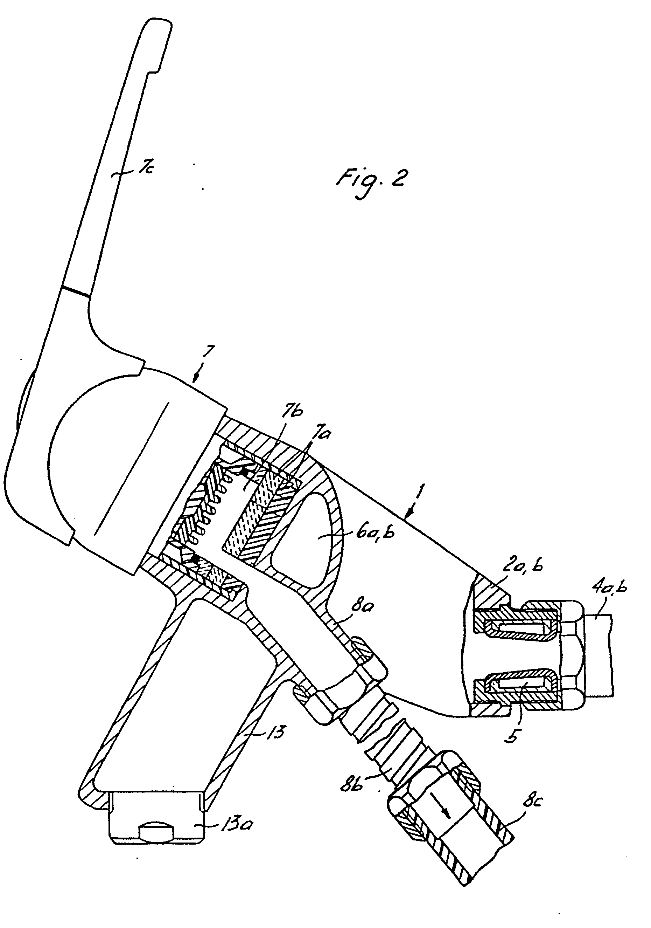

Fig. 2 eine Seitenansicht der Armatur nach Fig. 1, teilweise weggebrochen.

Die gezeichnete Armatur, die beispielsweise als kombinierte Bade-/Duschen-Armatur verwendbar ist, besitzt ein etwa C-förmiges Gehäuse 1, dessen Schenkel je eine in einem Zulaufstutzen 2a bzw. 2b endende Kammer 3a bzw. 3b aufweist. In diese dem Anschluss der Armatur an die Warmwasserleitung 4a bzw. die Kaltwasserleitung 4b dienenden Zulaufstutzen 2a, 2b ist je ein lärmdämpfendes Drosselelement 5 eingesetzt. Das Drosselelement besteht hier aus einer Mantelhülse, in welche unter Belassung eines Ringraumes ein konisches, z.B. aus Gummi oder Kunststoff bestehendes, Rohrstück eingesetzt ist. Aus den beiden Gehäusekammern 3a, 3b führt je ein Kanal 6a bzw. 6b zu einer zentral im Mittelteil des Gehäuses 1 angeordneten, hier als mechanischer Einhebelmischer 7 mit keramischen Steuerscheiben 7a ausgebildeten Mischvorrichtung. Die Mischkammer 7b dieses Mischers 7 steht über einen zentralen Auslaßstutzen 8a und einen metallisch ummantelten Schlauch 8b mit einer hier nicht näher gezeichneten Handbrause 8c in Verbindung. Durch vertikales aufwärts bzw. abwärts Verschwenken des Mischerhebels 7c lässt sich in bekannter Weise die an der als Zapfstelle dienenden Brause 8c auszugebende Wassermenge einstellen, während durch Drehen des Mischerhebels 7c um die Achse der Steuerscheiben 7a die Wassertemperatur einstellbar ist. Aus jeder der beiden Gehäusekammern 3a, 3b führt ein weiterer durch ein Rohrstück in einer Zwischenwand des Gehäuses 1 gebildeter Kanal 9a bzw. 9b über ein hier als Kegelventil dargestelltes Ventil 10 bzw. 11, dessen Sitz 10a bzw. 11a am genannten Rohrstück gebildet ist, in einen Auslaufkanal 12a bzw. 12b im Mittelteil des Gehäuses 1. Die beiden Auslaufkammern 12a, 12b münden in einen zentralen Mischkammerstutzen 13, dessen Auslass durch ein übliches Wannenfüll-Mundstück 13a gebildet ist. Die so über die Kanäle 9a, 9b aus den Kammern 3a, 3b gespeiste Zweigriff-Mischbatterie gestattet über die mittels der Griffknöpfe 10b, 11b einstellbaren Ventile 10, 11 Menge und Temperatur des durch das als zweite Zapfstelle dienende Mundstück auszugebenden Wassers völlig unabhängig von der Stellung des Mischers 7 einzustellen. Ebenso könnten die beiden Kegel-Ventile 10, 11 auch durch zwei getrennt betätigbare Keramik-Scheibenventile ersetzt sein.

In jedem Fall ergibt die beschriebene Ausbildung eine kompakte, bedienungsfreundliche Armatur, die ein völlig unabhängiges Einstellen von Menge und Temperatur der beiden Zapfstellen erlaubt.

**Patentansprüche**

1. Mischarmatur mit zwei Zapfstellen für Sanitärinstallationen, deren Gehäuse (1) mit einem Warmwasser- (2a) und einem Kaltwasseranschluss (2b) versehen ist, welche Anschlüsse in zwei getrennte Gehäusedurchlässe (3a, 3b) für den Warmwasser- und den Kaltwasserzufluss münden, wobei jeder dieser Durchlässe (3a, 3b) einerseits über je einen ersten Kanal (6a, 6b) mit einer der ersten Zapfstelle (8c) vorgeordneten Ausgabevorrichtung und anderseits über je einen zweiten Kanal (9a, 9b) mit einer der zweiten Zapfstelle (13a) vorgeordneten Zweigriff-Mischbatterie verbunden ist, wobei die beiden zweiten Kanäle (9a, 9b) über je ein Ventil der Zweigriff-Mischbatterie (10, 11) mit einem zentral am Gehäusemittelteil vorgesehenen Mischkammerstutzen (13) verbunden sind, dessen Auslass die zweite, z.B. als Wannenfüll-Mundstück (13a), ausgebildete Zapfstelle bildet, dadurch gekennzeichnet, dass die beiden Durchlässe (3a, 3b) in den an entsprechende Wasserleitungen (4a, 4b) anschliessbaren Schenkeln eines C-förmigen Armaturengehäuses (1) gebildete Kammern sind, wobei die genannten ersten Kanäle (6a, 6b) zu der im Mittelteil des Gehäuses (1) angeordneten als mechanischer oder thermostatischer Mischer (7) ausgeführten Ausgabevorrichtung führen, dessen Mischkammer (7b) über einen zentralen Auslaßstutzen (8a) mit der ersten z.B. durch eine Brause (8c) gebildeten Zapfstelle verbunden ist.

2. Mischarmatur nach Anspruch 1, dadurch gekennzeichnet, dass die der ersten Zapfstelle (8c) zugeordnete Mischvorrichtung ein mechanischer Einhebelmischer (7) mit Keramiksteuerscheiben ist.

3. Mischarmatur nach Anspruch 1 oder 2, dadurch gekennzeichnet, dass die der zweiten Zapfstelle (13a) zugeordnete Zweigriff-Mischbatterie (10, 11) zwei getrennt betätigbare Kegelventile aufweist, deren Sitz (10a, 11a) an einem den zweiten Kanal (9a, 9b) bildenden in eine Zwischenwand des Gehäuses (1) eingesetzten Rohrstück gebildet ist.

4. Mischarmatur nach einem der Ansprüche 1 oder 2, dadurch gekennzeichnet, dass die der zweiten Zapfstelle (13a) zugeordnete Zweigriff-Mischbatterie (10, 11) zwei getrennt betätigbare Keramik-Scheibenventile aufweist, deren Sitz (10a, 11a) aus einem den zweiten Kanal (9a, 9b) bildenden, in eine Zwischenwand des Gehäuses (1) eingesetzten Rohrstück geformt ist.

## Claims

1. Mixer tap fitting comprising two take-off points for sanitary installations, whose housing (1) is provided with hot water and cold water connectors (2a) and (2b) respectively, which connectors lead into two separate housing passages (3a, 3b) for the inflow of hot water and cold water, each of these passages (3a, 3b) being connected on the one hand via a first channel (6a, 6b) in each case to a dispensing or delivery means preceding the first take-off point (8c) and on the other hand via a respective second channel (9a, 9b) case to a twin handle mixer fitting upstream of the second take-off point (13a), the two second channels (9a, 9b) being connected in each case via a valve of the twin handle mixer fitting (10, 11) to a mixing chamber connector (13) centrally provided on the middle portion of the housing, the outlet of which forms the second take-off point formed as a tub filler spout (13a) for example, characterised in that the two passages (3a, 3b) are chambers formed in the branches of a C-shaped fitting housing (1) which are connectible to corresponding water pipes (4a, 4b), the said first channels (6a, 6b) leading to the dispensing means constructed as a mechanical or thermostatic mixer (7) and situated in the central portion of the housing (1), the mixing chamber (7b) of which is connected via a central outlet connector (8a) to the first take-off point formed by a shower (8c) for example.

2. Mixer tap fitting according to claim 1, characterised in that the mixer device associated with the first take-off point (8c) is a mechanical single-lever mixer (7) comprising ceramic control plates.

3. Mixer tap fitting according to claim 1 or 2, characterised in that the twin handle mixer fitting (10, 11) provided on the second take-off point (13a) has two cone valves which may be operated separately, whose seats (10a, 11a) are formed on a pipe element forming the second channel (9a, 9b) and inset into a partition of the housing (1).

4. Mixer tap fitting according to one of the claims 1 or 2, characterised in that the twin handle mixer fitting (10, 11) associated with the second take-off point (13a) has two ceramic disc valves which may be operated separately, the seats (10a, 11a) of which are formed by a pipe element forming the second channel (9a, 9b) and inset into a partition of the housing (1).

## Revendications

1. Garniture mélangeuse avec deux prises d'eau pour installations sanitaires, dont l'enceinte (1) est munie d'un branchement pour eau chaude (2a) et d'un branchement pour eau froide (2b), ces deux branchements débouchant dans deux siphons séparés (3a, 3b) pour la venue d'eau chaude et d'eau froide, chacun des deux siphons (3a, 3b) étant relié d'une part, par une première conduite (6a, 6b) au dispositif d'alimentation correspondant à la première prise d'eau (8c), et d'autre part par une deuxième conduite (9a, 9b) à la robinetterie mélangeuse correspondant à la deuxième prise d'eau (13a), les deux conduites (9a, 9b) étant reliée chacune, par l'intermédiaire d'une vanne (10, 11) de la robinetterie mélangeuse à un tuyau de la chambre de mélange (13) prévu dans la partie centrale de l'enceinte, dont la sortie constitue la deuxième prise d'eau, conçue par exemple comme un ajutage pour le remplissage de cuve (13a). Les deux siphons (3a, 3b) sont des chambres dans les branches d'une enceinte en forme de C (1), reliées aux conduites d'eau correspondantes (4a, 4b), lesdites premières conduites (6a, 6b) conduisant au dispositif d'alimentation servant de mitigeur (7) mécanique ou thermostatique, placé dans la partie centrale de l'enceinte (1), dont la chambre de mélange (7b) est reliée par un tuyau d'évacuation (8a) central avec la première prise d'eau, constituée par exemple par une douche (8c).

2. Garniture mélangeuse selon la revendication 1, caractérisée en ce que le dispositif de mélange relié à la première prise d'eau (8c) est un mitigeur monocommande mécanique (7) avec un disque de commande en céramique

3. Garniture mélangeuse selon la revendication 1 ou 2, caractérisée en ce que la robinetterie mélangeuse à deux commandes (10, 11) reliée à la deuxième prise d'eau (13a), présente deux soupapes à boisseau indépendantes, dont le siège (10a, 11a) est placé dans un tuyau dans la paroi latérale de l'enceinte (1) et qui constitue la deuxième conduite (9a, 9b),

4. Garniture mélangeuse selon la revendication 1 ou 2, caractérisé en ce que la robinetterie mélangeuse à deux commandes (10, 11) reliée à la deuxième prise d'eau (13a), présente deux soupapes à boisseau independantes, dont le siège (10a, 11a) est placé dans un tuyau dans la paroi latérale de l'enceinte (1) et qui constitue la deuxième conduite (9a, 9b).

Fig. 1.

Fig. 2